# EUROPÄISCHE PATENTANMELDUNG

(11) **EP 3 144 758 A1**
(43) Veröffentlichungstag der Anmeldung: **22.03.2017**
(21) Anmeldenummer: 15185936.0
(22) Anmeldetag: 18.09.2015
(51) Int. Cl.: G05B 19/4069, G05B 17/02, G05B 23/02

(54) **STEUERUNGSSYSTEM SOWIE VERFAHREN ZUM BETRIEB EINES STEUERUNGSSYSTEMS MIT EINER REALEN UND EINER VIRTUELLEN STEUERUNG**

(71) Anmelder: Siemens Aktiengesellschaft, 80333 München (DE)
(72) Erfinder: Amthor, Karl-Josef, 82229 Seefeld (DE); Seeger, Guido, 91083 Baiersdorf (DE)

(57) **Zusammenfassung**

Bei der Ausführung eines industriellen Prozesses bzw. beim Betrieb einer industriellen Anlage oder Maschine sollen relevante Daten erfasst werden, ohne dafür die Steuerung für den betreffenden industriellen Prozesses bzw. die Anlage oder Maschine zusätzlich zu belasten. Die Erfindung sieht hierfür ein Steuerungssystem (1, 4, 5; 1', 4', 5'; 1'', 4", 5'') vor mit einer realen Steuerung (1; 1'; 1'') zur Steuerung eines industriellen Prozesses, einer Anlage oder Maschine, einer virtuelle Steuerung (4; 4'; 4'') zur Simulation der Steuerung des industriellen Prozesses, der Anlage oder der Maschine, Synchronisationsmittel zur Synchronisation der realen Steuerung (1; 1'; 1'') und der virtuellen Steuerung (4; 4'; 4''), einer übergeordnete Prozessoreinheit (5; 5'; 5'') zum Erfassen und/oder Generieren von Betriebsdaten und/oder Zustandsdaten bezüglich des Prozesses, der Anlage oder der Maschine, wobei die Betriebsdaten und/oder Zustandsdaten auf aus der virtuellen Steuerung (4; 4'; 4'') herrührenden Daten basieren. Durch die Abfrage der Daten aus der virtuellen Steuerung (4; 4'; 4'') wird die reale Steuerung (1; 1'; 1'') nicht zusätzlich belastet.

## Beschreibung

Die Erfindung betrifft ein Steuerungssystem, umfassend eine reale Steuerung zur Steuerung eines industriellen Prozesses, einer Anlage oder einer Maschine sowie eine virtuelle Steuerung zur Simulation der Steuerung des industriellen Prozesses, der Anlage oder der Maschine.

Die Produktion von Werkstücken mit Hilfe von numerisch gesteuerten Werkzeugmaschinen und anderen Produktionsmaschinen muss vielen Anforderungen gerecht werden. Vor allem müssen Werkstücke mit einer definierten Qualität in möglichst kurzer Zeit produziert werden. Stillstandszeiten, z.B. durch Verschleiß, Ausfall oder Beschädigung von Maschinenkomponenten oder Werkzeugen müssen vermieden werden. Werkstücke, die außerhalb der zulässigen Fertigungstoleranzen liegen, müssen vermieden oder wenigstens erkannt und ggf. aussortiert werden.

Ähnlich verhält es sich bei der Steuerung industrieller Anlagen oder industrieller Prozesse. Auch hier sind Ausfallzeiten mit hohen Kosten verbunden und daher unbedingt zu vermeiden.

Um die "Prozessqualität" fortlaufend zu messen und schädliche Tendenzen frühzeitig zu erkennen, setzen die Betreiber der Maschinen oder Anlagen sowohl auf eine integrierte als auch auf eine externe Überwachung von Prozessdaten aller Art. Bei Standard-Problemen, für die alle relevanten Signale direkt in der Steuerung abgreifbar sind, kann der Steuerungshersteller oder der Maschinenhersteller eine integrierte Prozessdatenerfassung und Prozessüberwachung bereitstellen, auf die der Endkunde dann bei Bedarf zugreifen kann.

In vielen Fällen hat der Maschinenbetreiber aber spezielle Bedürfnisse, d.h. er benötigt weitere Daten und Auswertungen um seine Produktion optimal am Laufen zu halten. Er ergänzt dann auf der Maschinensteuerung eine selbst definierte und projektierte "Maschinendatenerfassung" oder "Betriebsdatenerfassung" (MDE/BDE), indem er eine selbst konfigurierbare Funktionalität der Maschinensteuerung nutzt und passend projektiert. Gemäß dieser Projektierung werden dann relevante Prozessdaten von der Maschinensteuerung an übergeordnete Leitsysteme, z.B. ein MES (Manufacturing Execution System) verschickt und dort ausgewertet.

Solche Datenerfassungen belasten die Maschinensteuerung mit zusätzlichen Aufgaben und müssen in der Regel mit dem Maschinenhersteller abgestimmt werden, da die Projektierung der Steuerung gegenüber dem Lieferzustand verändert werden muss. Außerdem müssen jeweils die spezifischen Randbedingungen einer Kombination Maschine/Steuerung berücksichtigt werden. Der Maschinenbetreiber kann sich kaum darauf verlassen, dass für seine Bedürfnisse hinsichtlich Qualitätssicherung Ressourcen in der Steuerung freigehalten wurden. Bei jeder Änderung geht er außerdem das Risiko ein, durch die zusätzliche Belastung, die die Prozessdatenerfassung mit sich bringt, die Produktivität der Maschine zu senken, weil dann für die eigentliche Steuerungsaufgabe weniger Rechenleistung zur Verfügung steht.

Aus Kief "CNC-Handuch" 2013/2014; Teil 5, Kap 4 "Fertigungs-Simulation" sind die Simulation einer Steuerung und einer Maschine mittels einer so genannten virtuellen Steuerung und einer virtuellen Maschine bekannt.

Aus der EP1932618B1 ist die Beobachtung des Arbeitsraumes einer Werkzeugmaschine mittels einer Kamera bekannt, wobei das Kamerabild auf einem Bildschirm angezeigt wird, wobei zeitsynchron mit der realen Bearbeitung eines Werkstücks in der Werkzeugmaschine eine Simulation der Bearbeitung gerechnet wird und wobei zwischen dem Kamerabild und einem durch die Simulation erzeugten virtuellen Bild umgeschaltet werden kann.

Aufgabe der vorliegenden Erfindung ist es daher, zur Ausführung eines industriellen Prozesses bzw. zum Betrieb einer industriellen Anlage oder Maschine relevante Daten zu sammeln und die für diese Datenerfassung erforderliche Belastung der Steuerung für den betreffenden industriellen Prozesses bzw. die Anlage oder Maschine zu minimieren.

Diese Aufgabe wird durch ein Steuerungssystem mit den in Patentanspruch 1 angegebenen Merkmalen gelöst. Ferner wird diese Aufgabe durch ein Verfahren zum Betrieb eines entsprechenden Steuerungssystems mit den in Patentanspruch 7 aufgezeigten Verfahrensschritten gelöst.

Die Erfindung kann vorteilhaft in Verbindung mit einer Vielzahl unterschiedlicher Steuerungen zur Steuerung industrieller Prozesse, Anlagen oder Maschinen eingesetzt werden. Darunter fallen insbesondere speicherprogrammierbare Steuerungen (SPS) zur Steuerung industrieller Prozesse oder Anlagen sowie numerische Steuerungen (CNC) zur Steuerung von Werkzeugmaschinen, Produktionsmaschinen, Robotern etc. Der Begriff "Steuerung" ist im Zusammenhang mit der Erfindung nicht streng im Sinne der Systemtheorie zu verstehen und umfasst selbstverständlich auch Regeleinrichtungen bzw. Regelungsvorgänge.

Ein erfindungsgemäßes Steuerungssystem sieht neben einer oben genannten realen Steuerung auch eine entsprechende virtuelle Steuerung vor, die das Verhalten der realen Steuerung möglichst exakt nachbildet. Dabei ist es im Zusammenhang mit der Erfindung wichtig, dass in der virtuellen Steuerung alle zur Steuerung des Prozesses, der Anlage oder Maschine relevanten Steuerungsparameter zumindest weitgehend zeitsynchron zu der realen Steuerung vorliegen. Die reale Steuerung bekommt somit einen "virtuellen Zwilling" zur Seite gestellt, der die gleiche Steuerungsaufgabe simulativ und schritthaltend zur realen Steuerung ausführt. Steuerungsaufträge werden sowohl an die reale als auch an die virtuelle Steuerung geschickt und von beiden parallel ausgeführt. Daraus resultiert eine weitestgehende Übereinstimmung der in der realen Steuerung und in der virtuellen Steuerung vorhandenen Daten.

Da an der realen Anlage bzw. Maschine auch Ereignisse auftreten können, die von vorne herein nicht bekannt sind, werden diesbezügliche Informationen bzw. Daten von der realen Steuerung auf die virtuelle Steuerung übertragen. Durch diese Datenübertragung wird die virtuelle Steuerung, die parallel zur realen Steuerung läuft, so gestützt, dass sie die Realität - zumindest bereichsweise - sehr genau nachbildet. Nahezu alle in der realen Steuerung vorliegenden Daten liegen dann auch in der virtuellen Steuerung vor und können aus dieser abgefragt werden. Die Abfrage von Daten aus der virtuellen Steuerung belastet die reale Steuerung nicht.

Bezüglich der Daten, die von der virtuellen Steuerung zu der übergeordneten Prozessoreinheit übertragen werden, sind dem Anwender nahezu keine Grenzen gesetzt. Darunter können alle aus der realen Maschine oder Anlage hervorgehenden Sensorsignale fallen, beispielsweise bzgl. Temperatur, Drehzahl, Druck etc. Ferner fallen darunter alle Daten, die Zustände der Maschine bzw. Anlage bzw. Steuerung betreffen (An, Aus, Hochlauf etc.). Weiterhin können auch alle Betriebsdaten der realen und/oder virtuellen Maschine sowie der realen und/oder virtuellen Steuerung darunter fallen, wie z.B. Betriebsstunden, Anzahl gefertigter Teile, Art der gefertigten Teile, Daten bzgl. Qualität der gefertigten Teile. Darüber hinaus können die von der virtuellen Steuerung zu der übergeordneten Prozessoreinheit übertragen Daten bereits aufbereitet sein, beispielsweise dadurch dass bereits statistische Auswertungen der betreffenden Daten, insbesondere in der virtuellen Steuerung, erfolgt sind (z.B. Anzahl der gefertigten Teile in einer bestimmten Zeiteinheit). Neben den genannten Betriebsdaten und Zustandsdaten können weiterhin auch Diagnosedaten von der virtuellen Steuerung zu der übergeordneten Prozessoreinheit übertragen werden. Darunter fallen alle Daten bezüglich Störungen, Ausfallzeiten etc.

Zur Synchronisation der realen Steuerung und der virtuellen Steuerung ist es erforderlich, dass auch der virtuellen Steuerung die für die Steuerung der Maschine oder Anlage relevanten Sensorsignale zur Verfügung gestellt werden. Darunter fallen beispielsweise Achsstellungen, Drehzahlen oder eine Vielzahl weiterer Sensorsignale, beispielsweise bezüglich Temperatur, Druck, Position etc. Vorzugsweise werden die betreffenden Sensorsignale parallel an die reale und die virtuelle Steuerung gesendet. Es ist aber auch möglich, dass Sensorsignale über die reale Steuerung an die virtuelle Steuerung weitergeleitet werden.

Um den zumindest näherungsweise zeitsynchronen Betrieb der realen Steuerung und der virtuellen Steuerung zu ermöglichen, umfassen die dafür erforderlichen Synchronisationsmittel entsprechend schnelle Datenverbindungen zwischen der realen Steuerung und der virtuellen Steuerung bzw. zwischen der Anlage oder Maschine und der virtuellen Steuerung. Darüber hinaus verfügen die reale und die virtuelle Steuerung auch über eine entsprechende, dem Fachmann hinlänglich bekannte Software zur Sicherstellung der im Zusammenhang mit der Erfindung erforderlichen Synchronität.

Zur Synchronisation der virtuellen Steuerung mit der realen Steuerung werden ferner vorteilhaft zeitbasierte Daten auf die virtuelle Steuerung übertragen. Dadurch kann insbesondere eine zeitsynchrone Abarbeitung eines Steuerprogramms, z.B. eines Teileprogramms einer Werkzeugmaschine, durchgeführt werden. Weiterhin vorteilhaft werden auch zustandsbasierte Daten von der realen Steuerung auf die virtuelle Steuerung übertragen. Zustandsbasierte Daten spiegeln Systemzustände der realen Steuerung, der realen Maschine oder der realen Anlage wider. Darunter fallen insbesondere viele Daten mit Bezug zu Sensorsignalen der in einer Maschine oder Anlage vorhandenen Sensoren. Diese reichen von einfachen Schalterstellungen über Temperatur, Druck, Lage bis hin zu Daten bezüglich Drehzahlen oder Achsstellungen. Durch die Übertragung der entsprechenden Daten lässt sich die gewünschte Synchronität zwischen der realen Steuerung und der virtuellen Steuerung erreichen. Nicht vorhergesehene Zustände, beispielsweise eine nicht von einem Teileprogramm erfasste Unterbrechungen der Bearbeitung eines Werkstücks mittels einer Werkzeugmaschine, z.B. wg. Werkzeugwechsel aufgrund von Bruch oder Verschleiß, werden so auch von der virtuellen Steuerung mit erfasst.

Beim Betrieb von Anlagen oder Maschinen ist es üblich, Betriebsdaten oder Zustandsdaten bezüglich der gesteuerten Prozesse, Anlagen oder Maschinen an übergeordnete Prozessoreinheiten, wie z.B. ein MES (Manufacturing Execution System), zu übertragen, um dort beispielsweise statistische Auswertungen bezüglich der betreffenden Prozesse, Anlagen oder Maschinen durchführen zu können. Hierfür ist das Übertragen umfangreicher Daten von der Steuerung zu der übergeordneten Prozessoreinheit erforderlich. Um dafür die reale Steuerung nicht zu sehr zusätzlich zu belasten, sieht die Erfindung vor, dass die erforderlichen Betriebsdaten und/oder Zustandsdaten nicht von der realen Steuerung, sondern von der virtuellen Steuerung auf die übergeordnete Prozessoreinheit übertragen werden. Dadurch wird die reale Steuerung durch die übergeordnete Prozessoreinheit nicht zusätzlich belastet. Es muss lediglich sichergestellt werden, dass die virtuelle Steuerung die geforderten Daten an die übergeordnete Prozessoreinheit übertragen kann, ohne dabei die Synchronität mit der realen Steuerung zu verlieren. Dies kann jedoch durch eine entsprechende Rechenleistung der virtuellen Steuerung und durch entsprechende Datenverbindungen zwischen der virtuellen Steuerung und der übergeordneten Prozessoreinheit stets gewährleistet werden. Es müssen lediglich die entsprechenden Mittel zur Verfügung gestellt werden, was jedoch bei der virtuellen Steuerung leicht möglich ist.

Bei der übergeordneten Prozessoreinheit kann es sich um ein Prozessleitsystem, z.B. SCADA- (Supervisory Control and Data Acquisition) System zum Überwachen und/oder Steuern technischer Prozesse, Anlagen oder Maschinen handeln. Weiterhin kann die übergeordnete Prozessoreinheit auch zur Steuerung in der Betriebsleitebene dienen und hierfür vorteilhaft als MES (Manufacturing Execution System) ausgebildet sein. Ein derartiges System ermöglicht die Führung, Lenkung, Steuerung oder Kontrolle der Produktion und umfasst hierfür insbesondere die Erfassung von Betriebsdaten und Maschinendaten. Darüber hinaus könnte es sich bei der übergeordneten Prozessoreinheit auch um ein ERP-(Enterprise-Resource-Planning-)System handeln, welches Daten bezüglich der eingesetzten Betriebsmittel auf Unternehmensleitebene erfasst und auswertet.

Weiterhin vorteilhaft ist die virtuelle Steuerung mit einer virtuellen Maschine oder Anlage verbunden. Es wird somit nicht nur das Verhalten der Steuerung simuliert, sondern auch die Maschine bzw. Anlage selbst. Vorteilhaft können dann erfindungsgemäß nicht nur die virtuelle Steuerung betreffende Daten, sondern auch die virtuelle Maschine oder Anlage betreffende Daten an die übergeordnete Prozessoreinheit übertragen werden. Besonders vorteilhaft ist auch eine Datenübertragung zwischen der realen Maschine und der virtuellen Maschine vorgesehen, so dass die virtuelle Maschine, insbesondere im laufenden Betrieb, der realen Maschine oder Anlage angepasst werden kann. Dadurch können z.B. auch bestimmte Zustände der realen Maschine oder Anlage, die insbesondere in Abhängigkeit von Sensorsignalen erfasst werden, bei der Simulation mittels der virtuellen Maschine berücksichtigt werden.

Besonders vorteilhaft ist die reale Steuerung als CNC-Steuerung (Computerized Numerical Control) zur Steuerung einer Werkzeugmaschine ausgebildet und mit einer Werkzeugmaschine verbunden und die virtuelle Steuerung als virtuelle CNC ausgebildet und mit einer virtuellen Werkzeugmaschine verbunden. Dann können sogar Daten bezüglich eines durch die virtuelle Werkzeugmaschine gefertigten virtuellen Werkstücks an die übergeordnete Prozessoreinheit übertragen werden.

Die Erfindung wird nachfolgend anhand von Ausführungsbeispielen näher erläutert. Es zeigen:
- FIG 1: die Datenerfassung bei einer Werkzeugmaschine mittels einer virtuellen Steuerung,
- FIG 2: die Datenerfassung bei einer Werkzeugmaschine mittels einer virtuellen Steuerung und einer virtuellen Maschine,
- FIG 3: die Datenerfassung bei einer Werkzeugmaschine mittels einer virtuellen Steuerung, einer virtuellen Maschine und einem virtuellen Werkstück.

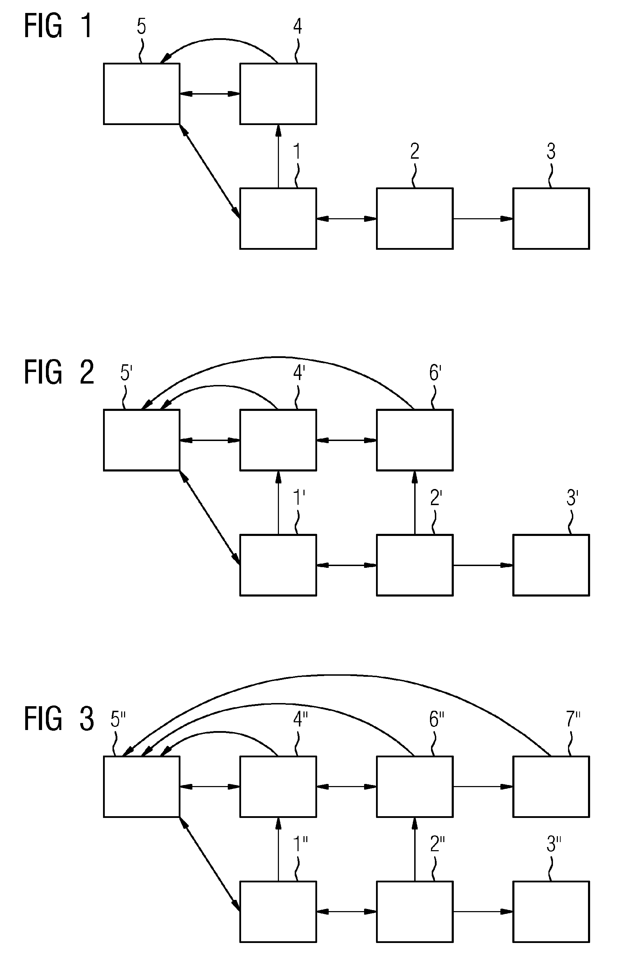

Figur 1 zeigt in stark vereinfachter und schematisierter Darstellung eine reale Steuerung 1 zur Steuerung einer realen Werkzeugmaschine 2. Vorteilhaft ist die reale Steuerung 1 als Computerized Numerical Control (CNC) ausgebildet. Die CNC 1 steuert die Werkzeugmaschine 2 zur Herstellung eines realen Werkstücks 3. In der Regel wird eine Werkzeugmaschine nicht autonom betrieben, sondern sie arbeitet in einem größeren Fertigungsverbund zusammen mit weiteren Werkzeugmaschinen zur Herstellung bestimmter Güter. Dabei ist es erforderlich, die Produktion mittels der einzelnen Werkzeugmaschinen aufeinander abzustimmen. Hierfür werden von jeder einzelnen Werkzeugmaschine, insbesondere deren Steuerung, entsprechende Daten bezüglich Art, Anzahl, Qualität etc. der hergestellten Werkstücke auf eine übergeordnete Prozessoreinheit 5 übertragen. Bei der übergeordneten Prozessoreinheit 5 kann es sich um ein Prozessleitsystem, insbesondere ein SCADA- ein MES- oder ein ERP-System handeln.

Im Ausführungsbeispiel soll die übergeordnete Prozessoreinheit 5 als MES-System ausgeführt sein. Erfindungsgemäß ist neben der realen Steuerung 1 eine virtuelle Steuerung 4 vorhanden, die vorteilhaft auf einer Standard-Hardware aufsetzt und die reale Steuerung 1 weitestgehend simuliert. Insbesondere führt die virtuelle Steuerung 4 das gleiche Teileprogramm aus wie die reale Steuerung 1. Zur Synchronisation der beiden Steuerungen ist eine Datenverbindung zwischen der realen Steuerung 1 und der virtuellen Steuerung 4 vorhanden. Mittels der so übertragenen Daten können beispielsweise Ereignisse an der realen Maschine 2 mittels der Steuerung 1 erfasst und auf die virtuelle Steuerung 4 übertragen werden, so dass zur Gewährleistung der Synchronität zwischen der realen Steuerung 1 und der virtuellen Steuerung 4 auch reale Maschinendaten durch die virtuelle Steuerung berücksichtigt werden. Erfindungsgemäß greift nun das MES-System vorzugsweise nicht mehr direkt auf die Steuerung 1 zu, sondern entnimmt die erforderlichen Daten entweder ausschließlich oder zumindest überwiegend von der virtuellen Steuerung 4. Die Datenerfassung bleibt damit zumindest näherungsweise rückwirkungsfrei für die laufende reale Steuerung bzw. Maschine. Da die virtuelle Steuerung auf Standard-Hardware und Standard-Software aufsetzt und keinen harten Echtzeitbedingungen ausgesetzt ist, können eventuelle Ressourcen-Engpässe durch Austausch dieser Standard-Hardware und -Software gelöst werden. Ein Eingriff in die reale Steuerung 1 ist hierfür nicht erforderlich, so dass die Produktionssicherheit nicht gefährdet wird. Außerdem werden teure Stillstandszeiten, die sich bei Umrüstungen nie vermeiden lassen, eingespart. Änderungen einer bestehenden Datenerfassung können kurzfristig erprobt werden. Bewähren sie sich zur Optimierung der Produktion, lassen sie sich leicht auf andere virtuelle Steuerungen übertragen. Verläuft ein entsprechender Test nicht erfolgreich, werden sie aufwandsarm wieder zurückgenommen.

Bei dem Ausführungsbeispiel gemäß Figur 2 sind zu Figur 1 funktionsgleiche Funktionsblöcke mit dem gleichen, jeweils um einen Strich ergänzten Bezugszeichen versehen. Im Unterschied zu Figur 1 umfasst das Ausführungsbeispiel gemäß Figur 2 auch eine virtuelle Maschine 6', durch die das Verhalten der realen Maschine 2' möglichst realitätsnah simuliert werden kann. Relevante Daten bezüglich der realen Maschine 2' lassen sich daher auch ohne Umweg über die virtuelle Maschinensteuerung 4' direkt von der virtuellen Maschine 6' abgreifen, vorausgesetzt letztere verfügt über eine entsprechende Schnittstelle zur Datenerfassung. Das ermöglicht eine präzise Erfassung der relevanten Daten. Ungenauigkeiten durch Abtasteffekte und Datenkonvertierungen werden so vermieden. Steuerungsexperten müssen seltener konsultiert werden, da die virtuelle Steuerung 4' nicht alle Anfragen beantworten muss.

Bei einer weiteren vorteilhaften Ausgestaltung der Erfindung wird nun auch das reale Werkstück 3 durch ein virtuelles Werkstück simuliert, welches in Figur 3 mit dem Bezugszeichen 7" versehen ist. Sofern auch das reale Werkstück 3" durch ein virtuelles Werkstück 7" simuliert wird und letzteres eine Schnittstelle zur Datenerfassung bietet, lassen sich die relevanten Daten dort direkt abgreifen, ohne Umwege über die virtuelle Maschine 6" bzw. die virtuelle Maschinensteuerung 4''. Auch dies erleichtert und beschleunigt die Abfrage der betreffenden Daten.

Zusammenfassend erhält der Betreiber der Produktion für jeden Zustand, der im virtuellen System über Abfrage-Schnittstellen zugänglich gemacht ist, vollständige Transparenz, ohne die laufende Produktion zu beeinflussen. Nur sein Implementierungsaufwand und die Leistungsfähigkeit der Ablaufplattform für das virtuelle System setzen ihm Grenzen, die er durch entsprechende Hardware- und Softwarekomponenten jedoch leicht umgehen kann. Die Ablaufplattform muss so leistungsfähig sein, dass das virtuelle Teilsystem dem realen im Mittel folgen kann. Geschwindigkeitsschwankungen durch kurzzeitige Ressourcenengpässe sind im virtuellen Teilsystem erlaubt und können durch Zwischenspeicherung der stützenden Zustandsinformationen aus dem realen System überbrückt werden. Ein dauerndes Zurückfallen des virtuellen Teilsystems würde den Zweck der Betriebsdatenerfassung jedoch nicht mehr erfüllen.

Der Maschinenhersteller muss bei Änderungen in der Regel nicht behelligt werden, da die einmal eingerichtete Konfiguration unverändert bleibt. Der Betreiber der Produktion ist auch der Betreiber des virtuellen Systems und hat die volle Hoheit über dessen Funktionalität und kann diese Hoheit für seine Zwecke nutzen, solange er die Anteile, die für das korrekte Nachbilden des realen Verhaltens wesentlich sind, nicht verändert.

Lediglich in den Fällen, in denen aus der realen Maschinensteuerung zusätzliche Informationen benötigt werden, um die Nachführgenauigkeit des virtuellen Systems zu erhöhen, muss die Konfiguration der realen Maschinensteuerung nachträglich verändert werden.

## Patentansprüche

1. Steuerungssystem (1, 4, 5; 1', 4', 5'; 1", 4", 5"), umfassend
- eine reale Steuerung (1; 1'; 1") zur Steuerung eines industriellen Prozesses, einer Anlage oder einer Maschine,
- eine virtuelle Steuerung (4; 4'; 4") zur Simulation der Steuerung des industriellen Prozesses, der Anlage oder der Maschine,
- Synchronisationsmittel zur Synchronisation der realen Steuerung (1; 1'; 1") und der virtuellen Steuerung (4; 4'; 4"),
- eine übergeordnete Prozessoreinheit (5; 5'; 5") zum Erfassen von Daten bezüglich des Prozesses, der Anlage oder der Maschine und zum Verarbeiten dieser Daten,
wobei die von der übergeordneten Prozessoreinheit (5; 5'; 5") erfassten Daten von der virtuellen Steuerung (4; 4'; 4") auf die übergeordnete Prozessoreinheit (5; 5'; 5") übertragbar sind.

2. Steuerungssystem (1, 4, 5; 1', 4', 5'; 1", 4", 5") nach Anspruch 1, wobei Betriebsdaten und/oder Zustandsdaten und/oder Diagnosedaten bezüglich des Prozesses, der Anlage oder der Maschine, von der virtuellen Steuerung (4; 4'; 4") auf die übergeordnete Prozessoreinheit (5; 5'; 5") übertragbar sind.

3. Steuerungssystem (1, 4, 5; 1', 4', 5'; 1", 4", 5") nach Anspruch 1 oder 2, wobei zur Synchronisation der virtuellen Steuerung (4; 4'; 4") mit der realen Steuerung (1; 1'; 1") zeitbasierte Daten und/oder zustandsbasierte Daten von der realen Steuerung auf die virtuelle Steuerung (4; 4'; 4") übertragbar sind.

4. Steuerungssystem (1, 4, 5; 1', 4', 5'; 1", 4", 5") nach einem der vorherigen Ansprüche, wobei die übergeordnete Prozessoreinheit (5; 5'; 5") als MES zur Führung, Lenkung, Steuerung oder Kontrolle einer Produktion ausgebildet ist.

5. Steuerungssystem (1, 4, 5; 1', 4', 5'; 1", 4", 5") nach einem der vorherigen Ansprüche, wobei die reale Steuerung (1; 1'; 1") als CNC zur Steuerung einer Werkzeugmaschine (2) ausgebildet ist.

6. Steuerungssystem (1, 4, 5; 1', 4', 5'; 1", 4", 5") nach einem der vorherigen Ansprüche, wobei die reale Steuerung (1; 1'; 1") mit einer realen Maschine oder Anlage verbunden ist und die virtuelle Steuerung (4; 4'; 4") mit einer virtuellen Maschine (6'; 6") oder Anlage verbunden ist.

7. Verfahren zum Betrieb eines Steuerungssystems (1, 4, 5; 1', 4', 5'; 1", 4", 5"), wobei
- ein industrieller Prozess, eine Anlage oder eine Maschine von einer realen Steuerung (1; 1'; 1") gesteuert wird,
- die Steuerung des industriellen Prozesses, der Anlage oder der Maschine von einer virtuellen Steuerung (4; 4'; 4") simuliert wird,
- die reale Steuerung (1; 1'; 1") und die virtuelle Steuerung (4; 4'; 4") synchronisiert werden,
- eine übergeordnete Prozessoreinheit (5; 5'; 5") Daten bezüglich des Prozesses, der Anlage oder der Maschine erfasst und verarbeitet,
wobei die von der übergeordneten Prozessoreinheit (5; 5'; 5") erfassten Daten von der virtuellen Steuerung (4; 4'; 4") auf die übergeordnete Prozessoreinheit (5; 5'; 5") übertragen werden.

8. Verfahren zum Betrieb eines Steuerungssystems (1, 4, 5; 1', 4', 5'; 1", 4", 5") nach Anspruch 7, wobei Betriebsdaten und/oder Zustandsdaten und/oder Diagnosedaten bezüglich des Prozesses, der Anlage oder der Maschine, von der virtuellen Steuerung (4; 4'; 4") auf die übergeordnete Prozessoreinheit (5; 5'; 5") übertragbar sind

9. Verfahren zum Betrieb eines Steuerungssystems (1, 4, 5; 1', 4', 5'; 1", 4", 5") nach Anspruch 7 oder 8, wobei zur Synchronisation der virtuellen Steuerung (4; 4'; 4") mit der realen Steuerung (1; 1'; 1") zeitbasierte Daten und/oder zustandsbasierte Daten von der realen Steuerung (1; 1'; 1") auf die virtuelle Steuerung (4; 4'; 4") übertragen werden.

10. Verfahren zum Betrieb eines Steuerungssystems (1, 4, 5; 1', 4', 5'; 1", 4", 5") nach einem der vorhergehenden Ansprüche, wobei anhand der mittels der übergeordneten Prozessoreinheit (5; 5'; 5") erfassten oder/oder generierten Betriebsdaten und/oder Zustandsdaten Service-Daten generiert werden.

11. Verfahren zum Betrieb eines Steuerungssystems (1, 4, 5; 1', 4', 5'; 1", 4", 5") nach Anspruch 10, wobei die Service-Daten automatisch an einen Service-Provider übermittelt werden.
